# EUROPEAN PATENT SPECIFICATION

(11) **EP 1 747 309 B1**
(45) Date of publication and mention of the grant of the patent: **05.12.2007**
(21) Application number: 05740513.6
(22) Date of filing: 03.05.2005
(51) Int. Cl.: D01F 9/00, D01F 9/12, C01B 31/02

(54) **PRODUCTION OF CARBON NANOTUBES**
HERSTELLUNG VON CARBONNANORÖHRCHEN
PRODUCTION DE NANOTUBES DE CARBONE

(30) Priority: 05.05.2004 GB 0410033
(43) Date of publication of application: 31.01.2007
(73) Proprietor: N Tec AS, 1323 Hovik (NO)
(72) Inventor: PINHEIRO, Jean-Patrick, N-2003 Lillestrøm (NO)
(74) Representative: Briddes, Sam
(86) International application number: PCT/NO2005/000146
(87) International publication number: WO 2005/106086

(56) References cited:
- WO-A-03/082733
- US-A- 5 916 642
- US-A1- 2001 050 219

## Description

This invention relates to production of carbon nanotubes, more specific the invention relates to improvements in the arc discharge method for producing high quality multi-walled carbon nanotubes (MWNT).

### Background

Carbon nanotubes are very long and closed tubular structures that may be considered to be a graphitic sheet that is folded onto itself to form a seamless cylinder which is terminated in both ends by a fullerene-like hemisphere. Carbon nanotubes are unique nanostructures that conceptually can be considered as a one-dimensional quantum wire due to their narrow size and very huge aspect ratio.

The simplest form of nanotubes is the single walled nanotube (SWNT), which is one atom in wall thickness and typically tens of atoms around the circumference. There are also known multi walled structures where two or more stacked graphitic sheets are folded onto themselves to form two or more concentric nanotubes similar to the Russian doll structure. This multi-walled structure is often denoted as a multi-walled carbon nanotube (MWNT).

After the discovery of carbon nanotubes in 1991, it was realised that carbon nanotubes may be considered as the ultimate carbon fibre formed of perfectly graphitized closed seamless shells which show unique mechanical and electronic properties that are very sensitive to its geometry and dimensions [1]. A decade later extensive research activity has established that carbon nanotubes is almost certainly the strongest, stiffest, and toughest molecule that can ever be produced, the best possible molecular conductor of both heat and electricity. In one sense the carbon nanotube is a new man-made polymer to follow from nylon, polypropylene and Kevlar. In another, it is a new "graphite" fibre, but now with the ultimate possible strength. In yet another it is a new species in organic chemistry, and potentially in molecular biology as well, a carbon molecule with the almost alien property of electrical conductivity, and super steel-strength [2].

Thus the potential of the carbon nanotube in the material, chemical and physical sciences and in several industrial fields is obviously vast. It is therefore an immense expectation and research activity in the world today for developing new materials, applications and products involving carbon nanotubes in a variety of fields such as reinforcement material for composites, ceramics, and metals, as conductive component in composites, as battery electrodes, as energy storage medium, in semiconducting applications such as cathode-ray lighting elements, flat panel displays, gas-discharge tubes for telecom, as nanoprobes and sensors, etc.

However, there is especially one obstacle that must be solved before carbon nanotubes can become a widely used industrial material; to date there are no known production methods that have successfully been scaled up to those mass production levels needed to bring the production costs of such nanotubes down to cost levels that the consumer marked can digest. Thus, so far, carbon nanotubes have only found use in high-technological niche products optimised on functionality and other applications where price is of little issue. If the potential of the very promising properties of carbon nanotubes shall be realised in typically consumer products such as clothes, electronic devices, batteries etc., the production costs must be cut substantially from present levels. This is especially the case for those qualities of MWNTs that this application is related to.

### Prior art

It was discovered in 1992 that an arc discharge method used for production of carbon whiskers could be modified to produce high quality MWNTs. This method is thoroughly described in pages 140 - 148 in [1] and is included in its entirety by reference in this application. This method and apparatus will be denoted as the conventional arc discharge method in this application.

The conventional arc discharge method employs plasma, formed in helium gas when passing high DC currents through an opposing anode and cathode (in the form of carbon rods) in a helium atmosphere, to evaporate carbon atoms of the anode that subsequently condenses on the cathode to form MWNTs and other carbon structures. In this way, the carbon anode is gradually consumed and the deposit grows accordingly on the cathode. The deposit will obtain the same shape as the anode. If for instance a longitudinal hole is drilled at the centre of the anode, the deposit will also have such a hole.

Due to the high temperatures needed to evaporate carbon, the process must be performed in an inert atmosphere, and it is typically employed a helium atmosphere of approximately 500 Torr, typical current densities are about 150 A/cm² (cross section area of the anode), applied voltage is around 20 V, the distance between the anode and cathode is about 1 mm, the diameter of the anode is in the order of 5-10 mm, and the cylindrical growth rate of the deposit will be in the order of 1-2 mm/min. The temperatures in the plasma zone are typically in the order of 3000-4000 °C.

From experience it seems that a careful control of the current during the process is necessary. Too much current will fuse the material into a useless solid while a too little current will result in a slow deposit rate. The challenge is therefore to maintain a medium current flow as steady as possible. Experience has also shown that the cathode should be effectively cooled in order to obtain the best conditions for condensation of carbon nanotubes. Typically, the deposit on the cathode will be a cylinder rod with an outer hard shell of fused and useless material (nanotubes and nanoparticles fused together), and a black fibrous core containing about two-thirds nanotubes and one-third nanoparticles (polyhedral graphitic particles, also known as carbon onions).

An example of such technology is disclosed in US 5 916 642, which describes a reactor and method for forming carbon nanotubes which encapsulates a guest material. The publication is silent on the use of large diameters and the need for cooling the main body of the anode.

A long standing problem with this arc discharge technology has been the relatively slow deposition rates of 1-2 mm/min and the relatively narrow diameters of the carbon anodes of a few mm. Thus the production rates are too small to make this method viable for mass production of carbon nanotubes for the consumer market. Even though one can envision large series of plasma reactors such that the total output may be many kilograms per minute, the investment and maintenance costs will be too heavy to bring the production costs to levels which will allow nanotubes to replace traditional carbon fibres in consumer products such as plastics, composites, electronic devices etc. Therefore, if the carbon nanotube is to substitute far cheaper carbon fibres, the production capacity of each plasma reactor should be substantially enhanced from present levels. And since the temperature dependency of the formation process of the nanotubes makes it hard, if not impossible, to sufficiently increase the deposition rates to meet this objective, the only option is to increase the diameters of the carbon anodes.

However, the scaling up of the anode is complicated by a major problem: The current densities flowing through the electrodes decreases when the diameter of the electrodes is increased, resulting in substantially lowered deposition rates and wrong characteristics of the formed deposit.

Another problem encountered when using wider electrodes is that the plasma tends to be irregular such that the control of the gap between the electrodes is probably the most critical point of the process. It has been observed that the electrodes tips do not remain smooth and flat during the discharge. As the nanotube deposition proceeds, the tip surfaces change continuously in an erratic way. Nanotube deposition occurs preferentially in some parts of the cathode while the facing parts of the anode are excessively consumed. It is therefore important to find a way to maintain the electrode tips as even as possible. The inventors have observed that rotating the electrodes in relation to each other gives only a partial solution to the problem, since the rotation only works for maintaining the anode surface relatively flat. The irregularities of the cathode deposit tend, on the other hand, to be amplified. This problem will be enhanced with increasing diameters, and need to be solved.

### Objective of the invention

The main objective of this invention is therefore to provide a method and apparatus based on the conventional arc discharge technology that allows use of electrodes with large diameters for production of high-quality MWNTs.

It is also an objective of this invention to provide a method based on the conventional arc discharge technology that gives an improved control with the temperature gradients in the electrodes in order to allow use of large electrode diameters and reduced current densities.

### Summary of the Invention

The objectives of the invention can be obtained by the features as defined in the appended claims and following description of the invention.

The invention is based on a discovery that the electric conductivity of carbon decreases at temperatures approaching the vaporization point, and that this causes an enhanced resistance at the lower section near the tip of the anode due to heat conducted from the vaporization zone and into the bulk material of the anode. This problem is expected to become more severe with larger diameters of the electrodes, probably because a smaller fraction of the heat energy from the vaporization zone in the gap between the anode and cathode can escape by heat radiation since electrode tips with larger surface areas will absorb a larger fraction of the heat generated by the plasma inside the gap. Also, the heat generated within the electrodes by the flow of current is mainly dissipated via radiation. Thus, due to a decreasing surface/volume ratio with increased diameters, it should be expected that this dissipation becomes less efficient for higher diameters.

Thus according to this invention, the problem with increased electric resistance in the anode can be solved or at least substantially reduced by providing cooling means that controls/lowers the temperature in the anode at its lower parts facing the cathode. By lower part we mean the end section of the anode rod that is not connected to the base, i.e. the tip or lower section facing the cathode. This anode cooling should not be confused with conventional cooling of the electrodes where the bases of the electrodes are equipped with water cooling devices. Cooling of the base will of course not provide a satisfactory control of the temperature at the opposite end of the anode rod due to an insufficient thermal contact between the tip of the anode and the cooling device at the base.

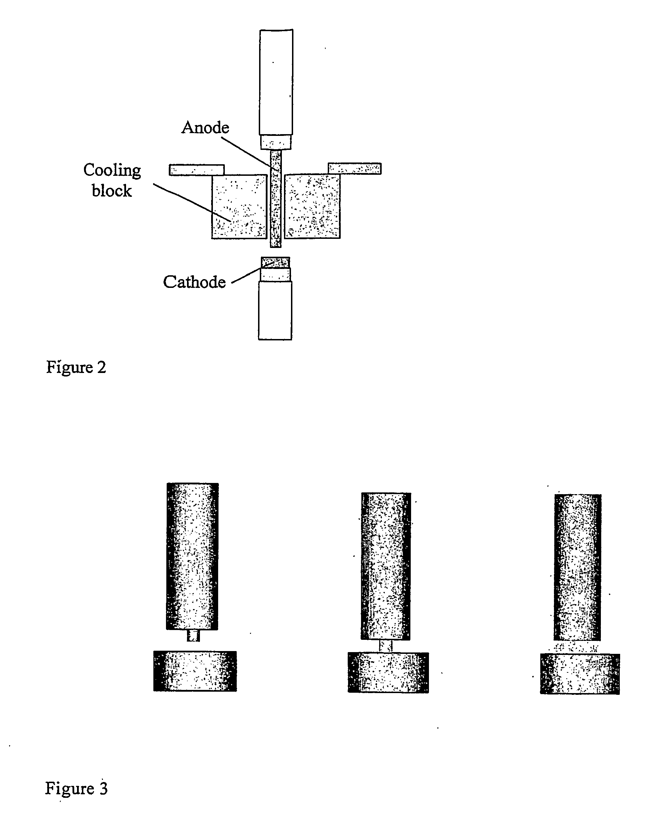

In a preferred embodiment of the invention, the water cooling of the lower section of the anode is provided by placing an annulus shaped water-cooled copper block around the lower section of the anode, see figure 2. By lower section we mean in the opposite end of the base, that is, the end section comprising the tip of the anode. The copper block has a through-going centre hole with an inner diameter that is slightly larger than the outer diameter of the anode, and the anode rod is inserted coaxially from above at the centre of this through-going hole and lowered until the tip protrudes slightly below the bottom plane of the copper block. This position must of course be maintained by lowering the anode electrode in accordance with the rate at which it is being consumed during production. The inventive idea of providing cooling of the anode tip in order to obtain better control with the temperature in this section of the anode can is of course not limited to the use of water-cooled copper blocks, but may be implemented with any other conceivable cooling device known to a skilled person.

The use of the water-cooled copper block has been tested on electrodes with a diameter of 25 mm. In accordance with the assumption that very high temperatures increases the electric conductivity resistance in the anode, an improved control with the current flow with much less current drop was obtained by applying active cooling of the lower section of the anode, shoving that it is possible to increase the production rates in each reactor by increasing the diameter of the electrodes. It is also found that the temperature in the chamber during the process is much lower with the cooling block, and thus the thermal wear on reactor components will be reduced accordingly.

There have also been found some unexpected beneficial results when applying the invention. For example has it been observed that the anode remains relatively flat during the process, even if the electrodes are not rotated in relation to each other when the temperature of the tip of the anode is lowered due to active cooling. This observation may be explained by the fact that the current distribution in the anode is probably more homogenous when the anode is cooled because the thermal gradients are reduced. Cooling the anode tip appears as an alternative solution to keep its surface flat. Another unexpected advantage of the inventive cooling is that the soot production is reduced by a factor of 2 compared to prior arts without such cooling. This is an especially advantageous result since it contributes to increase the yield to a greater extent than what is expected form the pure enhancement of the diameter of the electrodes.

The invention should not be considered to be restricted to electrodes with diameters of about 10-25 mm, but can of course be applied to any conceivable diameter of the electrodes up to diameters of several meters in magnitude.

Another problem with employing electrodes with larger diameters is the initiating of the arc and maintaining an even burn rate and thus, an even shape of the anode tip. The inventors have discovered that this problem can be solved or at least substantially reduced by providing a narrowing of the anode tip. In this way, the contact surface between the two electrodes during the initial contact is significantly reduced, and the current is forced to pass through a very restricted area such that the current flowing through the electrodes is considerably diminished. At the contact point, the high current density (i.e. the current/section ratio) induces locally an important increase of the temperature and the pointed end is rapidly vaporized. Using this method, it is therefore possible to start with relatively flat electrodes.

The size of the pointed end should be fitted according to the diameter of the electrodes. If the diameter of the point is too small, the current flowing through the electrodes during the contact will not be enough to sufficiently increase the temperature of the electrodes and the arc will extinguish as soon as the pointed end is consumed. An example of a preferred fitting in the case of 12 mm diameter electrodes is a tip with length 1 mm and diameter of 2.5 mm. In general, the diameter of the pointed end should be within in the range from ½ to 1/8 of the diameter of the anode.

A further problem when working with larger diameters is that the control of the gap becomes more important. Experiments have demonstrated that the best conditions for the production of nanotube material coincide with an average gap of 1-3 mm between the electrodes but gaps up to 12 mm can be used provided some precautions are taken (see below). It has been observed that the thickness of the hard outer shell (that does not contain nanotubes) is significantly reduced when using such large gaps. This suggests that the temperature of the cathode deposit may be lower when increasing the gap between the electrodes. However, the major drawback of this method is that the nanotube production rate is also considerably decreased.

Maintaining a large gap is therefore not pertinent when working with up to 12 mm diameter electrodes but might be necessary with larger electrodes, especially if heat dissipation from the plasma turns out to be a major problem. Another advantage of using large gaps is that no sophisticated system for the control of the electrodes motion is required. The gap can simply be adjusted by monitoring the current and maintaining it constant. However, the gap must be increased very gradually. The reason is that the current drops rapidly when the distance between the electrodes exceed approximately 3-4 mm. To counterbalance the decrease in current, the voltage must therefore be gradually increased as the gap is augmented.

As a precaution, it is better to wait for 1-2 minutes after the discharge has been initiated before augmenting the gap. A premature increase of the gap frequently leads to the arc extinction, probably because it has not stabilised yet.

The inventive features of applying active cooling of the lower sections of the anode tip and providing a narrowing of the tip may be implemented on all known conventional arc discharge reactors for producing carbon nanotubes with a device for cooling the anode tip in order to maintain a better control of the temperature and current flow. By conventional arc discharge reactors we mean reactors as described

in the prior art section above where two carbon electrodes are opposing each other with a narrow gap between them in an inert atmosphere. One example of such reactors are presented on page 143 of [1], one other is given in figure 2 of [4]. Usually, each electrode will be mounted on rotatable water-cooled bases such that it is possible to rotate the electrodes in relation to each other. The size of the gap between the opposing electrode tips can be strictly controlled and adjusted in order to maintain the optimum voltage drop over the gap, and thus controlling the current density through the electrodes. When a suitable DC-potential is applied at these bases, a DC-current will flow through the electrodes and cross the gap between them to form plasma. This plasma will heat the tip of the anode to an extent which causes carbon atoms to evaporate and migrate to the water-cooled cathode and deposit there. Such reactors are well known to the skilled person and need no further description here. By larger diameters of the electrodes we mean from about 10 mm in diameter and every practically conceivable size above 10 mm.

### List of figures

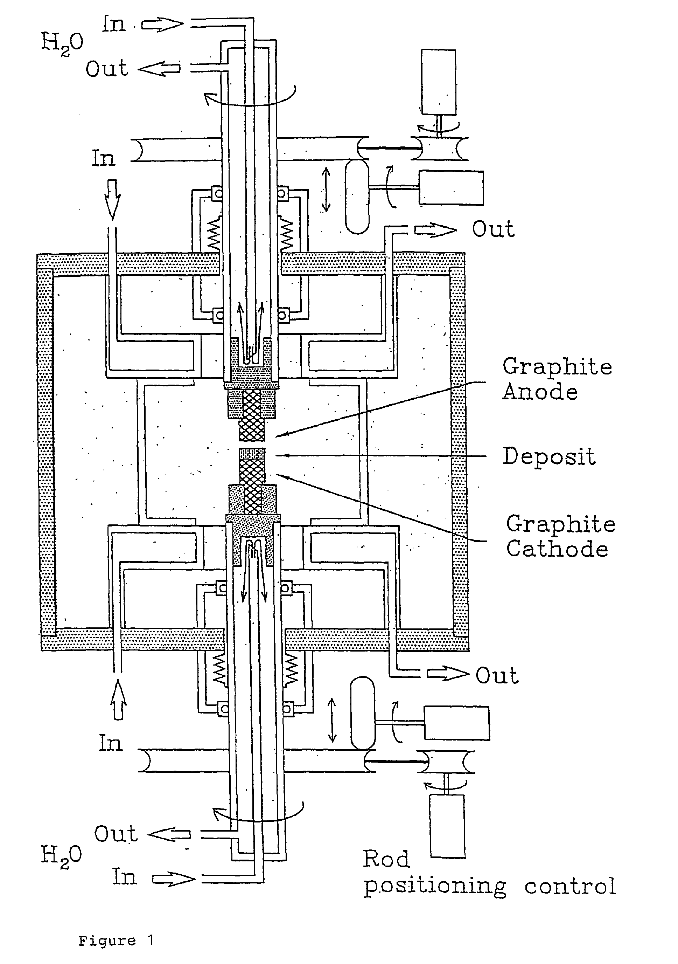

Fig. 1 shows a schematic drawing of a prior are conventional arc discharge reactor according to [4]
Fig. 2 shows a cross-sectional view from the side of the anode provided with a water-cooled copper block according to a preferred embodiment of the invention.
Fig. 3 shows a cross-sectional view from the side of anode according to the invention and the initiating of the are.
Fig. 4 shows a diagram presenting the current through the anode as a function of time with no cooling of the anode.
Fig. 5 shows a diagram presenting the current through the anode as a function of time with active cooling of the anode according to the invention.

### Verification of the invention

The invention will now be described in larger detail by way of verification experiments performed on a preferred embodiment of the invention.

The first series of verification tests was performed in order to test the assumption that the electrical conductivity of carbon decreases at higher temperatures, such that it is the temperature of the anode tip that is the limiting factor on the current through the electrodes.

### 1^{st} series of experiments:

The anode was wrapped in a graphite foil in order to increase its thermal insulation. The graphite foil was maintained in contact with the anode by means of several rings of graphite felt stacked on top of each other (see Figure 3), which also helped to improve the anode insulation. On purpose, the tip of the anode was left non-insulated.

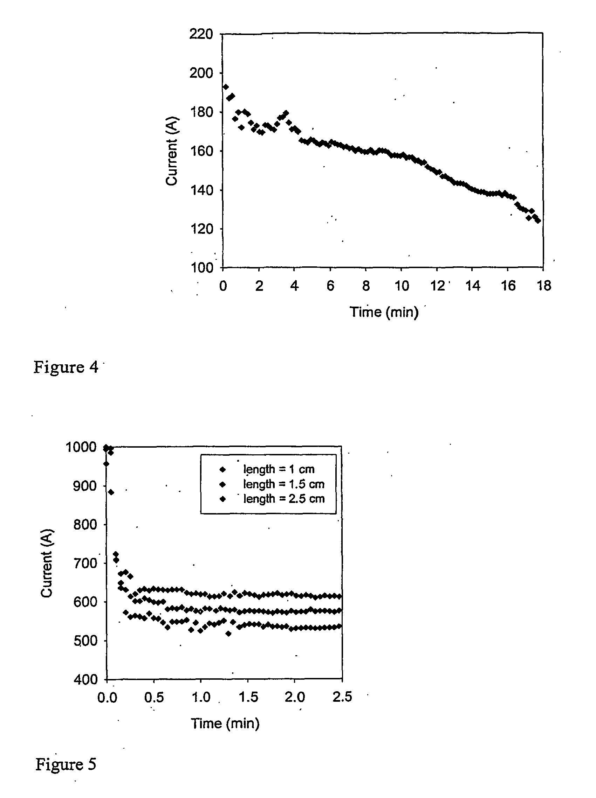

The current with a non-insulated 12 mm diameter anode is usually ranging from 180 to 200 A. In the present case, a very similar current was measured initially. However, a significant current drop was observed as soon as the distance from the tip to the insulated part of the electrode became lower than - 1.5 cm. The experiment was stopped when the tip of the anode went out of sight. At that time, the current had dropped down to 120 A (figure 4). The most plausible explanation is that the current drop is correlated to an increase of the anode tip temperature as the distance between the tip and the insulated part gets smaller.

### 2^{nd} series of experiments:

In order to confirm the assumption of decreasing electrical conductivity at high temperatures, a complementary set of experiments was performed using a different configuration designed to reduce the temperature of the anode tip The experiments were performed with very short anodes. (The electrodes are mounted on water-cooled copper holders. By reducing the length of the anode, it is possible to improve the cooling of the tip and, therefore, to reduce its temperature). Three experiments were performed on 26 mm diameter electrodes with increasingly shorter lengths (respectively 2.5, 1.5 and 1 cm). As expected, the current was observed to increase when decreasing the anode length, see figure 5. This result show that an increase of the temperature at the carbon anode tip leads to a decrease of the current flowing through it.

### References

1 Ebbesen, T. W. (ed.), "Carbon Nanotubes, preparation and properties", CRC Press Inc. 1997, preface.
2 Dresselhaus M.S. et al. (ed.), "Carbon Nanotubes, synthesis, structure, properties and applications", Springer Verlag, Topics in Applied Physics, Vol 80, foreword by Richard E. Smalley.
3 Ebbesen, T. W. and Ajayan, P. M., Nature 358, 1992, 220-222.
4 Colbert, D.T. et al., "Growth and Sintering of Fullerene Nanotubes", Science, vol. 266, 1994.

## Claims

1. Method for producing multi-walled carbon nanotubes (MWNT) in the arc discharge method, where a pair of carbon-rod electrodes placed in closed pressure resistant container filled with pure helium at 100-1000 Torr, where one end of each carbon-rod electrode are placed facing each other with a gap in the order of 0,1-12 mm, and where a current in the order of 50-300 A per cm² cross-section area of the anode is passed through the electrodes in order to vaporise carbon at the anode tip and then condensate the carbon atoms on the surface of the cathode tip,
**characterised in that** the temperature of the anode is controlled by providing active cooling of at least a section of the main body and/or end section (tip) of the anode.

2. Method according to claim 1,
**characterised in that** the cooling is provided by inserting the anode through the centre hole of an annulus shaped water-cooled copper block such that the tip of the anode protrudes slightly out of the opposite side of the copper block.

3. Method according to claim 1 or 2,
**characterised in that** the tip of the anode is provided with a narrowing, and that the arc discharge is initiated by physically contacting the narrowing of the anode with the end surface of the cathode before the electric potential over the electrodes is turned on in order to create an electric current flowing through the electrodes.

4. Method according to claim 3,
**characterised in that** the initial positioning of the anode is kept in 1 - 2 minutes after initiation of the arc before the gap is augmented to its optimal run position.

5. Carbon anode for production of multi-walled carbon nanotubes (MWNT) in a carbon arc discharge reactor, where the main body of the anode consists of a cylinder made of elementary carbon,
**characterised in that** the end section or tip of the anode is equipped with an end cylinder of elementary carbon with a diameter of approximately ¼ of the diameter of the main body of the anode and with a length of approximately 1 mm.

6. Reactor for production of multi-walled carbon nanotubes (MWNT) by the carbon arc discharge method, where the reactor is pressure resistant and sufficiently large to encompass:
- a rod-shaped carbon anode and cathode and where the electrodes are positioned along the same axis head to head with a distance or gap between them,
- water-cooled rotatable electrode bases,
- means for passing a carefully controlled electric current in the range of 50-300 A/cm² cross-sectional area anode through the electrodes and over the gap between them in order to create an arc discharge,
- means for regulating and maintaining the correct gap between the electrodes during production,
- means for rotating the electrodes in relation to each other,
- means for providing noble gas atmosphere with controlled pressure in the range of 100 - 500 Torr in the reactor, and
- a pressure resistant vessel encompassing all the above-mentioned equipment,
**characterised in that** the reactor also comprises means for active cooling of at least a section of the main body or end section (tip) of the anode.

7. Reactor according to claim 6,
**characterised in that** the means for active cooling of the main body and end section (tip) of the anode comprises an annulus shaped water-cooled copper block around the lower section of the anode.

## Patentansprüche

1. Verfahren zur Herstellung von mehrwändigen Carbonnanoröhrchen (MWNT) nach der Bogenentladungsmethode, wo ein Paar von Carbonstab-Elektroden in einem geschlossenen, druckresistenten Behälter platziert ist, der mit reinem Helium bei 100-1000 Torr gefüllt ist, wo ein Ende jeder Carbonstab-Elektrode so angeordnet ist, dass sie einander zugewandt sind, mit einer Lücke in der Größenordnung von 0.1-12 mm, und wo ein Strom in der Größenordnung von 50-300 A pro cm² Querschnittsfläche der Anode durch die Elektroden geschickt wird, um Carbon an der Anodenspitze zu verdampfen und dann die Carbonatome auf der Oberfläche der Kathodenspitze zu kondensieren,
**dadurch gekennzeichnet, dass** die Temperatur der Anode durch das Vorsehen aktiver Kühlung zumindest eines Teils des Hauptkörpers und/oder des Endteils (Spitze) der Anode, reguliert wird.

2. Verfahren nach Anspruch 1,
**dadurch gekennzeichnet, dass** die Kühlung vorgesehen wird, indem die Anode in das Mittelloch eines ringförmigen, wassergekühlten Kupferblocks eingeführt wird, so dass die Spitze der Anode etwas aus der entgegengesetzten Seite des Kupferblocks herausragt.

3. Verfahren nach Anspruch 1 oder 2,
**dadurch gekennzeichnet, dass** die Spitze der Anode mit einer Verengung versehen ist, und dass die Bogenentladung initiiert wird, indem die Verengung der Anode in direkten Kontakt mit der Erdoberfläche der Kathode gebracht wird, bevor das elektrische Potential über die Elektroden angelegt wird, um einen elektrischen Stromfluss durch die Elektroden zu erzeugen.

4. Verfahren nach Anspruch 3,
**dadurch gekennzeichnet, dass** die anfängliche Position der Anode für 1-2 Minuten nach Initiierung des Bogens beibehalten wird, bevor die Lücke zu ihrer optimalen Betriebsposition vergrößert wird.

5. Carbonanode zur Herstellung von mehrwändigen Carbonnanoröhrchen (MWNT) in einem Carbon-Bogenentladungsraktor, wo der Hauptkörper der Anode aus einem Zylinder besteht, der aus elementarem Carbon besteht,
**dadurch gekennzeichnet, dass** der Endteil oder die Spitze der Anode mit einem Endzylinder aus elementarem Carbon mit einem Durchmesser von annähernd einem Viertel des Durchmessers des Hauptkörpers der Anode und mit einer Länge von annähernd 1 mm, ausgestattet ist.

6. Reaktor zur Herstellung von mehrwändigen Carbonnanoröhrchen (MWNT) durch die Carbon-Bogenentladungsmethode, wo der Reaktor druckresistent und groß genug ist, um zu umfassen:
- eine stabförmige Carbon-Anode und -Kathode, wobei die Elektroden entlang derselben Achse Kopf an Kopf angeordnet sind, mit einer Entfernung oder Lücke zwischen ihnen,
- wassergekühlte, drehbare Elektrodensockel,
- Mittel um einen vorsichtig kontrollierten elektrischen Strom im Bereich von 50-300 A pro cm² Anodenquerschnittsfläche durch die Elektroden und über die Lücke zwischen ihnen zu schicken, um eine Bogenentladung zu erzeugen,
- Mittel zur Regulierung und Beibehaltung der korrekten Lücke zwischen den Elektroden während der Herstellung,
- Mittel zur Drehung der Elektroden relativ zueinander,
- Mittel zur Erzeugung einer Edelgasatmosphäre mit kontrolliertem Druck im Bereich von 100-500 Torr im Reaktor, und
- ein druckresistentes Gefäß, das all die oben erwähnten Geräte umgreift,
**dadurch gekennzeichnet, dass** der Reaktor auch Mittel zur aktiven Kühlung zumindest eines Teils des Hauptkörpers oder des Endteils (Spitze) der Anode umfasst.

7. Reaktor nach Anspruch 6,
**dadurch gekennzeichnet, dass** die Mittel zur aktiven Kühlung des Hauptkörpers und Endteils (Spitze) der Anode einen ringförmigen, wassergekühlten Kupferblock um den unteren Teil der Anode herum umfassen.

## Revendications

1. Procédé de fabrication de nanotubes de carbone à parois multiples (MWNT) par le procédé de décharge en arc, une paire d'électrodes à tige de carbone étant placée dans un contenant clos résistant à la pression, rempli d'hélium pur à 100-1 000 Torr, une extrémité de chaque électrode à tige de carbone étant placée face à face avec un espacement de l'ordre de 0,1-12 mm et un courant de l'ordre de 50-300 A par cm² de zone de section transversale de l'anode étant passé au travers des électrodes de manière à vaporiser du carbone au niveau de l'extrémité de l'anode, puis condenser les atomes de carbone au niveau de la surface de l'extrémité de la cathode, **caractérisé en ce que** la température de l'anode est modulée par un refroidissement actif d'au moins une partie du corps principal et/ou de la partie dd bout (extrémité) de l'anode.

2. Procédé selon la revendication 1, **caractérisé en ce que** le refroidissement est réalisé en insérant l'anode dans le trou central d'un bloc de cuivre en forme d'anneau, refroidi par de l'eau, de manière à ce que l'extrémité de l'anode dépasse légèrement du côté opposé du bloc de cuivre.

3. Procédé selon la revendication 1 ou 2, **caractérisé en ce que** l'extrémité de l'anode est munie d'un rétrécissement et **en ce que** la décharge en arc est initiée par la mise en contact physique du rétrécissement de l'anode avec la surface d'extrémité de la cathode avant que le potentiel électrique ne soit mis en place sur les électrodes, de manière à créer un courant électrique au travers des électrodes.

4. Procédé selon la revendication 3, **caractérisé en ce que** le positionnement initial de l'anode est maintenu pendant 1 à 2 minutes après l'initiation de l'arc, avant que l'espacement ne soit raugmenté à sa position optimale de fonctionnement.

5. Anode en carbone pour la fabrication de nanotubes de carbone à parois multiples (MWNT) dans un réacteur de décharge en arc au carbone, le corps principal de l'anode consistant en un cylindre constitué de carbone élémentaire, **caractérisée en ce que** la section de bout ou extrémité de l'anode est équipée d'un cylindre d'extrémité en carbone élémentaire ayant un diamètre représentant approximativement 1/4 du diamètre du corps principal de l'anode et ayant une longueur d'approximativement 1 mm.

6. Réacteur pour la fabrication de nanotubes de carbone à parois multiples (MWNT) par le procédé de décharge en arc au carbone, le réacteur étant résistant à la pression et suffisamment grand pour contenir :
■ une cathode et une anode en carbone en forme de tige, les électrodes étant positionnées sur le même axe, tête-à-tête, une distance ou un espacement les séparant,
■ des bases d'électrode rotatives, refroidies à l'eau,
■ des moyens de passage d'un courant électrique soigneusement contrôlé compris entre 50 et 300 A/cm² de zone de section transversale de l'anode au travers des électrodes et de l'espacement les séparant afin de créer une décharge en arc,
■ des moyens de régulation et de maintien de l'espacement correct entre les électrodes pendant la fabrication,
■ der moyens de rotation des électrodes l'une par rapport à l'autre,
■ des moyens d'introduction d'une atmosphère de gaz noble d'une pression contrôlée comprise entre 100 et 500 Torr dans le réacteur, et
■ une cuve résistante à la pression contenant tous les équipements susmentionnés,
**caractérisé en ce que** le réacteur comprend également des moyens de refroidissement actif d'au moins une partie du corps principal ou de la partie de bout (extrémité) de l'anode.

7. Réacteur selon la revendication 6, **caractérisé en ce que** les moyens de refroidissement actif du corps principal et de la partie de bout (extrémité) de l'anode comprennent un bloc de cuivre en forme d'anneau, refroidi par de l'eau, autour de la partie inférieure de l'anode.
